# EUROPEAN PATENT SPECIFICATION

(11) **EP 0 678 876 B1**
(45) Date of publication and mention of the grant of the patent: **29.04.1998**
(21) Application number: 95102091.6
(22) Date of filing: 15.02.1995
(51) Int. Cl.: G21C 17/06, G01P 1/12

(54) **Soundness inspection apparatus and method for nuclear reactor fuel assembly**
Vorrichtung und Verfahren zum Überprüfen der Unversehrtheit eines Kernreaktorbrennstabbündels
Appareil et procédé de contrôle de l'état d'un assemblage combustible de réacteur nucléaire

(30) Priority: 21.02.1994 JP 22791/94
(43) Date of publication of application: 25.10.1995
(73) Proprietor: KABUSHIKI KAISHA TOSHIBA, Kawasaki-shi, Kanagawa-ken 210 (JP)
(72) Inventor: Ozawa, Tamotsu, Chigasaki-Shi, Kanagawa-Ken (JP)
(74) Representative: Blumbach, Kramer & Partner GbR

(56) References cited:
- EP-A- 0 235 534
- EP-A- 0 309 829
- WO-A-91/17447
- DD-A- 269 904
- DD-A- 273 369
- FR-A- 2 685 958
- PATENT ABSTRACTS OF JAPAN vol. 12, no. 370 (P-767) 5 October 1988 & JP-A-63 121 718 (HITACHI LTD) 25 May 1988
- DATABASE WPI Week 8735, Derwent Publications Ltd., London, GB; AN 87-246604 & JP-A-62 169 085 (HITACHI) 25 July 1987

## Description

The present invention relates to an apparatus and method for inspecting the soundness of a nuclear fuel assembly when the fuel assembly is transported from a nuclear fuel fabrication facility to a nuclear power plant.

A fuel assembly used in a light-water reactor is produced in a nuclear fuel fabrication facility, inspected prior to shipment, accommodated in a transportation container, and then transported to a nuclear power plant using transportation means such as trucks, trailers, freight cars, and ships.

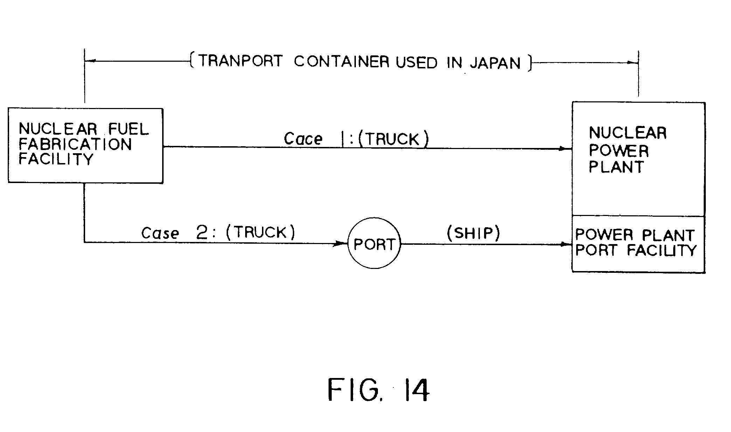

Fig.14 shows a nuclear fuel assembly transportation sequence as described above that is currently carried out in Japan (domestic country). Fig. 14 shows: a first case (Case-1) in which a truck is used to transport the nuclear fuel assembly from a nuclear fuel fabrication facility to a nuclear power plant; and a second case (Case-2) in which a truck is used to transport the nuclear fuel assembly from a nuclear fuel fabrication facility to a port from which a ship brings the nuclear fuel assembly to a nuclear power plant port facility or a port near a nuclear power plant.

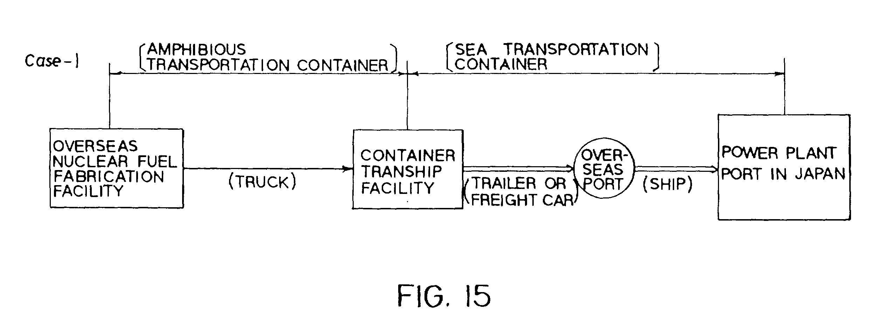

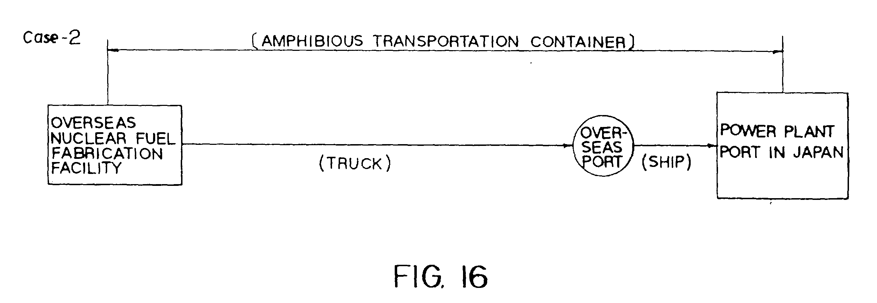

Fig. 15 and Fig. 16 show a transportation sequence in which a nuclear fuel assembly is transported from an overseas nuclear fuel fabrication facility to a nuclear power plant located in Japan.

In Fig. 15 that shows a first case (Case-1), a nuclear fuel assembly fabricated in an overseas nuclear fuel fabrication facility is put into a transportation container dedicated for land transportation, and is then transported using land transportation means such as trucks and the like to a tranship facility where the nuclear fuel assembly is transhipped from its land transportation container to a water transportation container such as a sea transportation container. From there, the nuclear fuel assembly in the sea transportation container is transported by a trailer or a freight car to an overseas port from which the nuclear fuel assembly is sent to a power plant located in Japan.

Fig.16 shows a second case (Case-2), in which a nuclear fuel assembly that is placed into a transportation container for an amphibious transportation use for land and sea is transported from an overseas nuclear plant by means of a truck to an overseas export port where the nuclear fuel assembly is transhipped to a ship to be sent to a nuclear power plant port facility in Japan.

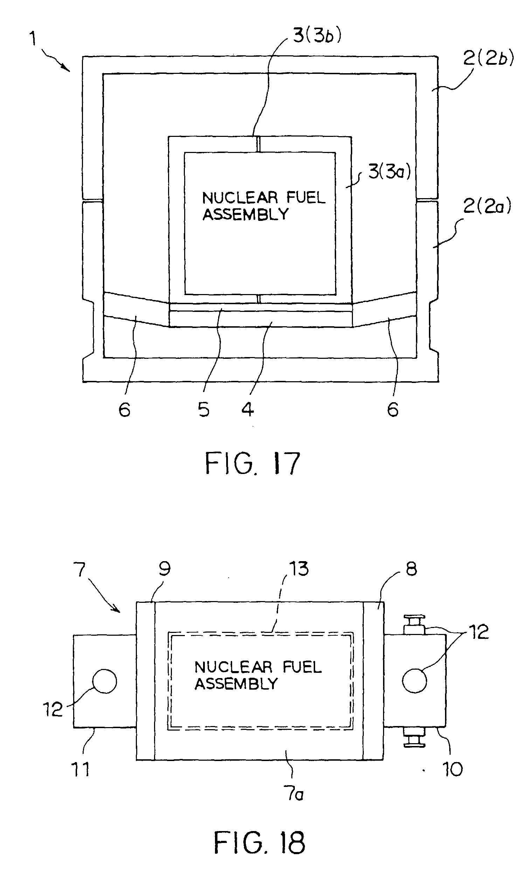

Fig.17 shows the construction of a land transportation container which is used to transport the nuclear fuel assembly from the overseas nuclear fuel fabrication facility to the container tranship facility shown in Fig. 15.

As shown in Fig. 17, the land transportation container 1 is mainly constructed of an outer container portion 2 and an inner container portion 3, and the outer container portion 3 is constructed of a container body 2a and a container lid 2b. The inner container portion 3 is constructed of a container body 3a and a container door 3b which holds a plurality of nuclear fuel assemblies inside, and the nuclear fuel assemblies are mounted on a support frame (cradle) 4 via a container platform 5. The cradle 4 is supported in a cradle-like manner by the outer container body 2a by means of suspension provided by a plurality of rubber vibration insulators (rubber pads) 6. Vibration applied in the course of land transportation is absorbed by the rubber pads 6, and the rubber pads 6 thus isolate the cradle 4 from shocks and steady vibration of a truck or other vehicle that transports the transportation container 1 in order to maintain the soundness of the nuclear fuel assemblies in their transportation.

Fig.18 shows the construction of a sea transportation container for use in the case shown in Fig.15. As shown in Fig. 18, the sea transportation container 7 is constructed of container body 7a for holding or accommodating the nuclear fuel assemblies, skirt support rings 8, 9 that support as support fixtures the body 7a at its longitudinal ends, and drums 10, 11 that support respective skirt support rings 8,9. The drums 10, 11 are supported by necessary transportation means or handling equipment via a trunnion 12 that is a pivotal support member.

Disposed inside the container body 7a is a nuclear fuel basket 13 for holding a plurality of nuclear fuel assemblies in place. The nuclear fuel basket 13 serves to isolate the nuclear fuel assemblies from vibration of a ship in the course of sea transportation, shocks and steady vibration of a trailer or a freight car in land transportation, and shocks encountered in the course of container handling.

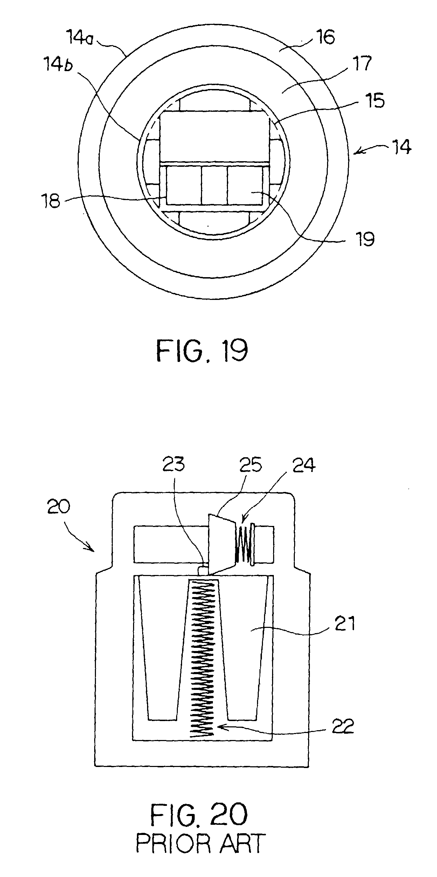

Fig. 19 shows the construction of an amphibious transportation container for use in the case shown in Fig. 16.

The amphibious transportation container 14 is made up of an outer barrel 14a, an inner barrel 14b, and a basket 15 fixedly disposed inside the inner barrel 14b. A shock isolator material 16 and a shielding material 17 are disposed between the outer barrel 14a and the inner barrel 14b. Disposed in the basket 15 is a cushioning material 18 for absorbing vibration in transit. The cushioning material 18 isolates nuclear fuel assemblies 19 held in the basket 15 from shocks or steady vibration by a trailer, a freight car or a ship when they are in transit in sea or land transportation.

To verify the soundness of the nuclear fuel assemblies that have been transported in such containers in any of the above transportation sequence, the following inspection is performed after the transportation.
(1) Whether or not an ON/OFF type accelerometer attached onto a container is at a trip state is checked. (The accelerometer is driven into the trip state when a one-time transient acceleration above a threshold value is applied onto the container.)
(2) The nuclear fuel assemblies pulled out of the transportation container are subjected to visual inspection in a nuclear reactor building.

The above two inspection tests thus verify and assure that the nuclear fuel assemblies are sound and free from any damage in transit and in handling operations.

If the inspection tests after transportation reveals that the ON/OFF accelerometer attached to the transport container is at a trip state, a full set of container package delivered (including the nuclear fuel assemblies) is transhipped back to the nuclear fuel fabrication facility from which it is supplied.

Fig. 20 diagrammatically shows a construction of a typical ON/OFF accelerometer. When an acceleration beyond a threshold value is applied to a mass 21 in the ON/OFF accelerometer 20, a spring 22 supporting the mass 21 is compressed, and a pin attached to the top of the mass 21 is lowered. As a result, the stopper of an upper spring 24 is disengaged, and a seat 25 is horizontally shifted, causing the ON/OFF accelerometer 20 to be put into a trip state.

Such an ON/OFF accelerometer is typically attached to a vibration isolator system of each transportation container in order to properly pick up or detect the acceleration in transit or in handling operations of the container.

Fig. 21 shows the mounting positions of the ON/OFF accelerometers on the land transportation container. Namely, the ON/OFF accelerometers 20 are mounted at both support end rigid portions of the cradle 4 using fasteners such as bolts.

Fig. 22 and Fig. 23 show the construction of nuclear fuel assemblies, as typical nuclear fuel assemblies to be transported, for use in a boiling water reactor (BWR) power plant.

The nuclear fuel assembly 19 comprises 60 sticks of nuclear fuel rods 26 arranged in an 8 by 8 grid pattern, with a water rod 27 centered in the assembly 19. The nuclear fuel rods 26 are supported both at their top portions by an upper tie plate 28 and at their bottom portions by a lower tie plate 29, and are bound in the grid pattern at a plurality of positions along their axis by spacers 30 longitudinally spaced apart, for example by seven spacers 30 at seven longitudinally spaced positions.

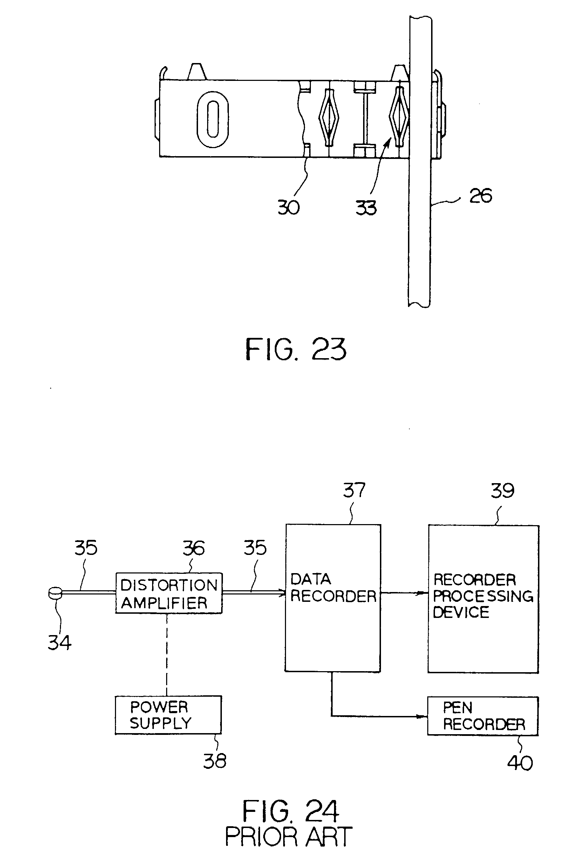

The nuclear fuel rod 26 is constructed of a cladding tube 26a which is loaded with nuclear fuel material such as UO₂ pellets 31 or MOX pellets (mixed oxide pellet) 32. Each nuclear fuel rod remains in contact with spacer springs 33 of the spacer 30 as shown in Fig. 23.

The following events deteriorate the soundness of nuclear fuel assemblies 19 in transit or in handling operations of the nuclear fuel assemblies 19.
(1) Cracked or chipped UO₂ pellets 31 or MOX pellets 32:
(2) Damaged nuclear fuel components or parts such as spacers 30:
   The above events (1) and (2) are likely to be attributed to intermittent applications of shocks beyond a threshold value in transit or in handling of the nuclear fuel assembly 19 or to continuous application of steady acceleration beyond a threshold value.
(3) Fretting damage on the surface of the cladding tube 26a of a fuel rod 26:
   A fretting damage is a damage which is caused in such a manner that the cladding tube 26a suffers on its surface when the spacer springs 33 are rubbed against the nuclear fuel rod 26 in transit. The fretting damage is widened or increased if the nuclear fuel assembly 19 is subjected to discrete applications of acceleration beyond a threshold value in transit or subjected to continuous application of steady acceleration beyond a threshold value.

To directly check if any of damages (1) through (3) is present or absent in the nuclear fuel assembly 19, the nuclear fuel assembly 19 may be possibly disassembled for close examination after it is received. However, the transported nuclear fuel assembly 19 is stored in a container tranship facility or a final destination nuclear power plant, and therefore, it is practically impossible to disassemble the transported nuclear fuel assembly 19 at the temporal storing site.

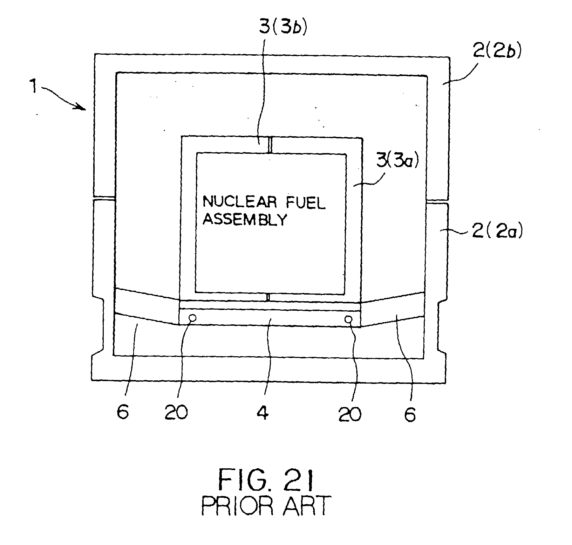

Due to aforementioned circumstances, it is impracticable to directly examine the soundness of the nuclear fuel assembly after it is transported. As an alternative to this direct examination, the following indirect method is conventionally adapted. In the method, the ON/OFF accelerometers 20 are conventionally used and mounted on the cradle 4 of the land transportation container 1 as shown in Fig. 21, and transient impact acceleration beyond a threshold value that may have been applied in transit or handling of the container 1 is judged by the trip state of the ON/OFF accelerometer 20.

In this arrangement, however, the ON/OFF accelerometer 20 has a function to cause a trip only once when an isolated transient impact beyond the threshold is applied onto the accelerometer 20. Thus, the following problems are disadvantageously raised or presented.
(1) No means is available for verifying the cause of impact acceleration that caused the ON/OFF accelerometer 20 to trip. Namely, it is impossible to clearly point out or specify the cause of the impact acceleration.
   Namely, it is impossible to discriminate between a trip occurred in transit and a trip occurred in handling operations. It is also impossible to discriminate between a transient acceleration and an intermittent or steady acceleration in transit.
(2) Since intermittently and steadily applied accelerations cannot be picked up, fault identification (abnormal state) in vibration isolation system and fastening state of the transport container cannot be performed or confirmed.

Namely, it is not possible to identify, at each transportation sequence, faulty states such as deterioration and damage in vibration isolator system such as rubber vibration insulators of the transport container. Furthermore, it is not possible to identify, at each transportation sequence, faulty states such as damaged vehicle suspension system of transportation means such as trucks. Still furthermore, it is not possible to identify, at each transportation sequence, faulty states in fastening between the transport container and the transportation means.

The events that could damage the soundness of the nuclear fuel assemblies in transit are not properly or correctly judged. This results in following disadvantages:
(a) Since the events that could damage the soundness of nuclear fuel assemblies are not properly judged, a good nuclear fuel assembly that happened to be tripped by an isolated transient impact acceleration only is sent back to the nuclear fuel fabrication facility as faulty to undergo a close examination;
(b) When, for example, because of any faults in the vibration isolator system, the nuclear fuel assembly is under intermittent or steady application of acceleration below the trip set value of the ON/OFF accelerometer, the soundness of the nuclear fuel assembly may be increasingly adversely affected (for example, fretting damage worsens). In this case, the nuclear fuel assembly is accepted as good, because the ON/OFF accelerometer remains to be in a non-tripped state.

Since such problems are attributed to the use of the ON/OFF accelerometer, it is contemplated that an inspection means other than the ON/OFF accelerometer is used to collect data of steadily or continuously developed acceleration.

Fig. 24 exemplifies an inspection means that is used for the verification test prior to transportation such as normal test. However, this inspection means is not applied to the ordinary transports described above.

In Fig. 24, a small acceleration sensor 34 is glued onto the vibration isolator system of the container or any point of the container from which vibration data are required, using such as adhesive, and the acceleration sensor 34 is connected to a distortion amplifier 36 and a large data recorder 37 via cords 35. Designated by 38 is the power supply of the distortion amplifier 36. In this system, acceleration picked up by the acceleration sensor 34 is amplified by the distortion amplifier 36 and then data of this acceleration are collected by the data recorder 37.

Since the collected data, namely, reproduced signals, are analog signals, a large recorder processing device 39 is required to digitally process the signals. A pen recorder 40 is used to present or output waveform data, as necessary.

However, when such system is used in nuclear fuel assembly transportation, the following problems are disadvantageously presented.
(a') The entire capacity or volume of the system is large, so that it is not possible to carry the data recorder 37 on transportation means (trucks, trailers and the like).
(b') The data recorder 37 requires a large capacity power supply 38, and its recordable time is short, so that the data recorder 37 needs frequently stopping for changing a recording tape for a fixed short duration of time.
(c') To analyze and assess the acceleration data after transportation, the recorded-tape needs to be taken out of the data recorder 37 and needs to be loaded into the large recorder processing device 39 to undergo a close examination. Such an operation cannot quickly be performed at the transit spot or site after transportation.
(d') Since the acceleration sensor 34 is connected to the data recorder 37 via long cords 35, the cords 35 needs to be routed all the way to the mounting position of the data recorder 37. Such routing sometimes requires a total length of several 10 meters or more of cord and handling is troublesome, and the long code is liable to pick up noises of signals thereby to reduce an accuracy of the recorded data.

EP-A- 0 235 534 is directed to an impact detection apparatus for measuring and recording accelerations or other physical quantities experienced by easily damaged items of commerce such as fruits and electronic computers. The known apparatus is equipped with a sensing means for sensing accelerations, and a recording means for recording detected accelerations. The storage of acceleration data is merely effected in case the magnitudes of the acceleration satisfy predetermined criteria such as being in excess of a predetermined level. The known apparatus may be connected to an external device which may communicate with an internal microprocessor being connected to the memory.

The present invention has been developed in view of the above-described circumstances. It is an object of the present invention to provide an apparatus and method of soundness inspection for a nuclear fuel assembly, in which the soundness of the nuclear fuel assembly is verified by determining whether a damage is present or absent in the nuclear fuel assembly in transit. This verification is effected by presenting sequentially data of both acceleration developed steadily and impact acceleration developed intermittently in transit or in handling of a transport container, by differentiating between isolated transient maximum accelerations and steady accelerations to come to grips with accelerations developed, and by judging a display image that shows the sequential change of acceleration value.

To achieve the above object there is provided an an inspection apparatus for inspecting soundness of a nuclear fuel assembly, in accordance with claim 1. Some details of the implementation are indicated in the subclaims.

According to further aspect of the present invention, there is provided an inspection method in accordance with claim 9.

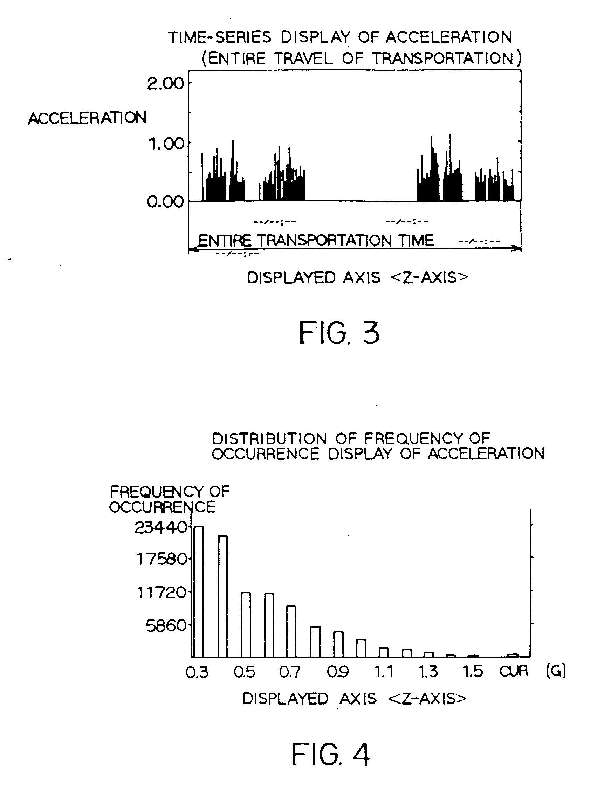

In the soundness inspection apparatus of the nuclear fuel assembly for the nuclear reactor and the soundness inspection method of the nuclear fuel assembly for the nuclear reactor according to the present invention, the sensing means continuously senses acceleration and its waveform taking place on the transport container, the recording means records the peak values of continuously developed acceleration and its waveform data, the determining means analyzes the data and presents or display them graphically on the visual display panel, and soundness verification is thus performed based on these data displayed on the panel as a display image . Fig.3 through Fig.6 show examples of peak values and waveform data.

Fig. 3 is a chart showing, in a time-series fashion, accelerations that have taken place from the start to end of a transportation and during handling operations of the transportation container, with the abscissa of the figure representing time and the ordinate of the figure representing acceleration values. Since this time-series display (chart) helps to identify maximum accelerations that have taken place or applied to the container during transit or in handling operations of the container, causes of maximum accelerations developed can be thus analyzed, so that the accelerations beyond a threshold value and the rest of accelerations are discriminated between isolated transient event and steady event. Namely, it becomes possible to confirm circumstances or conditions of the transportation of the container to which the accelerations had been applied.

Fig. 4 is a graph showing the distribution of frequency of occurrence of the accelerations that have taken place in transit or during the handling operations of the container. The distribution of frequency of occurrence display provides the overview of the frequency of occurrence of accelerations above the threshold value, thus helping one to discriminate between isolated transient acceleration and steady acceleration. Namely, whether the acceleration is a transient (intermittent) one or a continuous (steady) one can be identified.

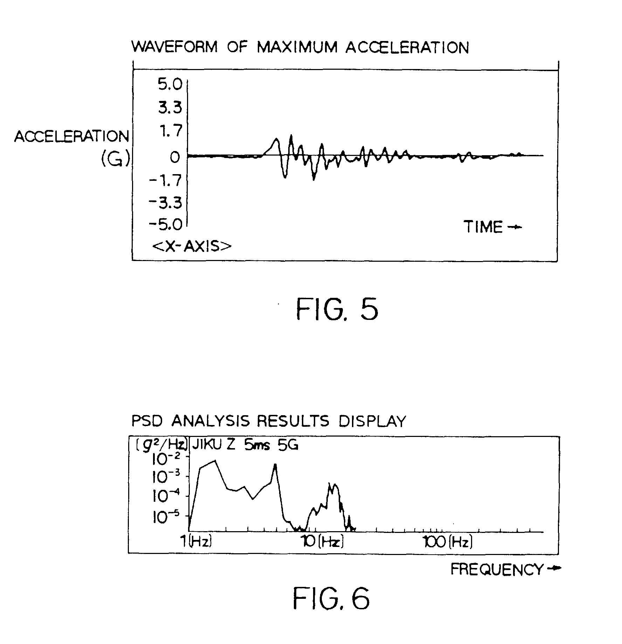

Fig. 5 is a graph showing the waveform of the accelerations that have taken place in transit or during the handling of the container. The distribution of frequency of occurrence display provides the overview of the frequency of occurrence of the accelerations above the threshold value, thus helping one to discriminate between isolated transient acceleration and steady acceleration.

Fig. 6 is a graph showing the analysis result of power spectrum density (PSD) of the maximum accelerations. This helps one to determine whether a fault lies in the vibration isolator system or in the mounting of the transportation container onto transportation means such as a truck.

Therefore, by determining whether or not peak values of accelerations are within a certain range (allowable range), the occurrence of an acceleration that damaged the soundness of the nuclear fuel assembly is detected, and by determining based on the waveform presented whether the accelerations are continuous or discrete, the soundness of the nuclear fuel assembly can be properly verified.

According to the constructions defined by claims 6 through 8, proper determination on soundness of the nuclear fuel assembly is performed when the transportation container is a land transportation container, a water transportation container or an amphibious transportation container.

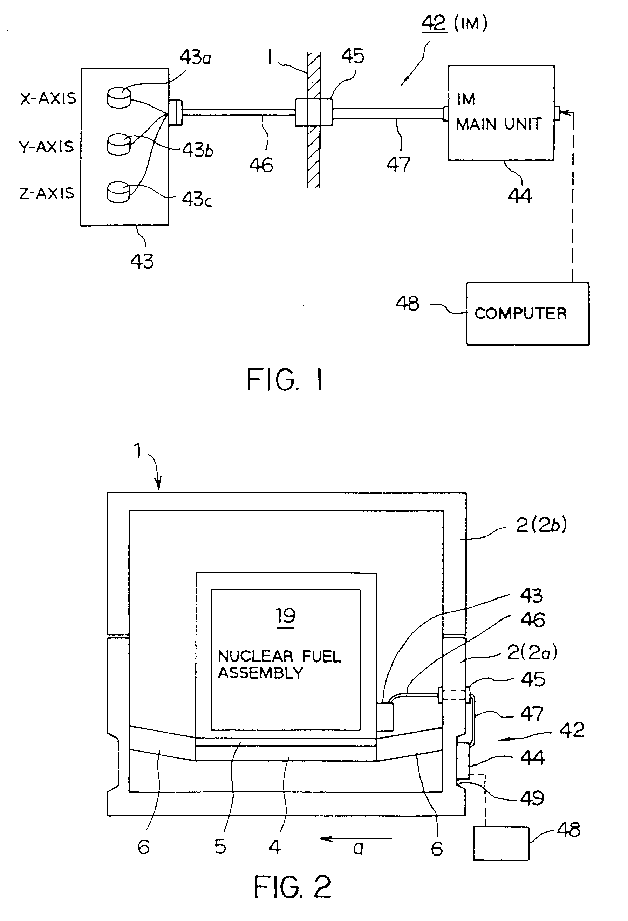

Fig. 1 shows a configuration of one embodiment of the inspection apparatus according to the present invention.

Fig. 2 shows the mounting state of the embodiment of the inspection apparatus according to the present invention.

Fig. 3 is a graph showing the time-series display image of accelerations according to the present invention.

Fig. 4 is a graph showing the distribution of frequency of occurrence of accelerations according to the present invention.

Fig. 5 is a graph showing the waveform example of accelerations according to the present invention.

Fig. 6 is a graph showing power spectrum density (PSD) of maximum accelerations according to the present invention.

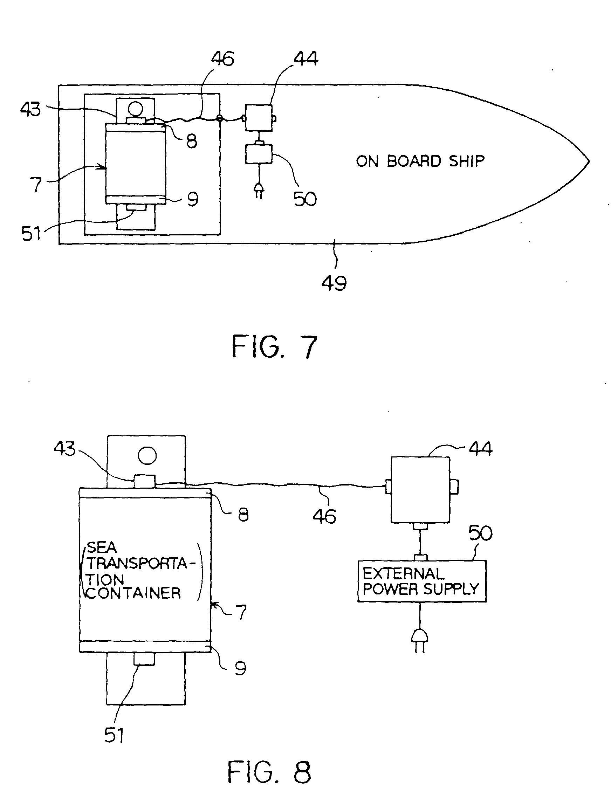

Fig. 7 shows the mounting example of the water (sea) transportation container in the embodiment.

Fig. 8 is an enlarged view of the major portion shown in Fig.7.

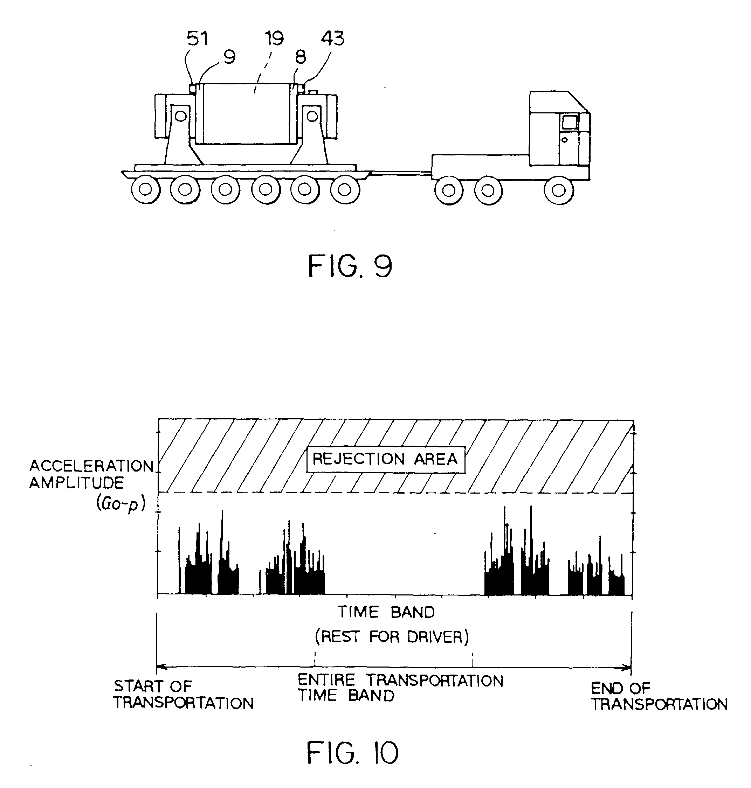

Fig. 9 shows a state of land transportation in the embodiment.

Fig. 10 is a soundness criteria graph of time-series display of accelerations developed in the embodiment.

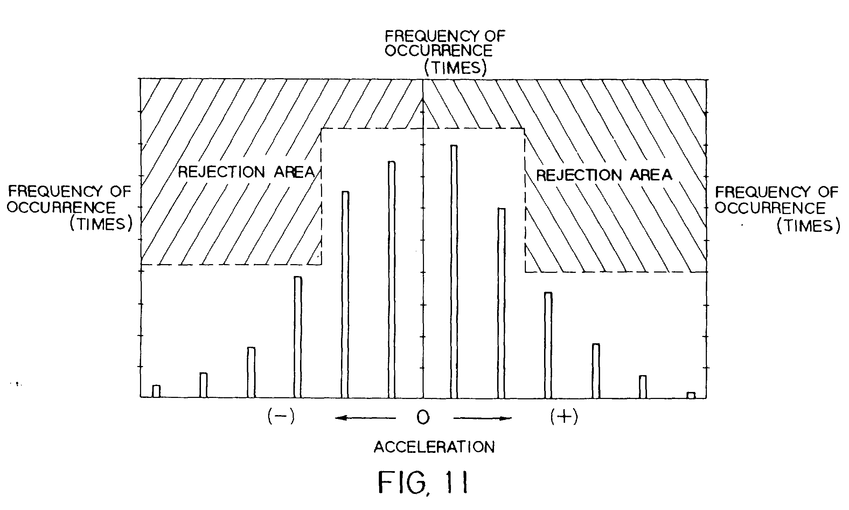

Fig. 11 shows a soundness criteria graph of distribution of frequency of occurrence of accelerations developed in the embodiment.

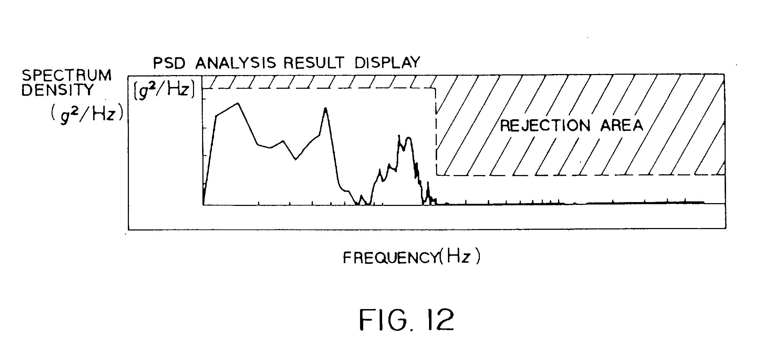

Fig. 12 shows a soundness criteria graph resulting from PSD analysis and frequency analysis of accelerations developed in the embodiment.

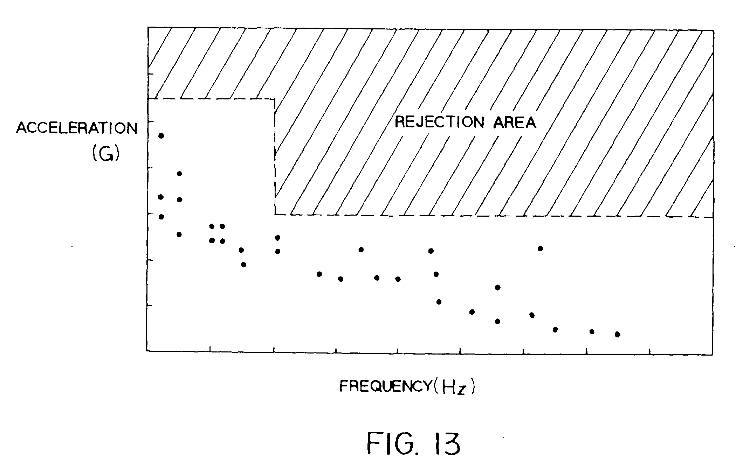

Fig. 13 shows a soundness criteria graph resulting from frequency analysis of accelerations developed in the embodiment.

Fig. 14 shows an example of a transportation sequence of the nuclear fuel assembly.

Fig. 15 shows another example of a transportation sequence of the nuclear fuel assembly.

Fig. 16 shows yet another example of a transportation Fig. 16 shows yet another example of a transportation sequence of the nuclear fuel assembly.

Fig. 17 shows a construction of a land transportation container.

Fig. 18 shows a construction of a water (sea) transportation container.

Fig. 19 shows a construction of an amphibious transportation container.

Fig. 20 shows a construction of the ON/OFF accelerometer.

Fig. 21 shows a state wherein the accelerometer is mounted on the land transportation container.

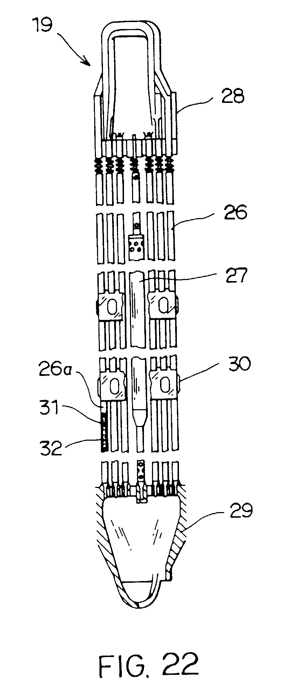

Fig. 22 shows a general construction of a nuclear fuel assembly.

Fig. 23 is a partially enlarged view of the nuclear fuel assembly.

Fig. 24 shows a prior art acceleration data collection system.

Referring now to the accompanying drawings, an embodiment of the present invention will be discussed hereunder.

This embodiment is directed to the transportation sequence Case-1 in Fig. 15, wherein a land transportation container is used to transport a nuclear fuel assembly from an overseas nuclear fabrication facility to an overseas tranship facility, and then from the tranship facility, the nuclear fuel assembly is transported in a water transportation container to a power plant port facility and then to the nuclear reactor building located in Japan as a domestic country.

Fig. 1 shows a general or basic construction of the inspection apparatus according to one embodiment of the present invention.

As shown in Fig. 1, the inspection apparatus (impulse memorizer: hereinafter referred to as IM) 42 comprises an IM sensor block 43 as sensing means for sensing accelerations developed and their waveform data, and an IM main unit 44 as recording means (memory means) for collecting and recording or memorizing the acceleration data, whereby the IM sensor block 43 is connected to the IM main unit 44 via low-noise cables 46, 47 with hermetically sealed connectors 45 connected therebetween.

The IM sensor block 43 houses or accommodates three sensors 43a, 43b, 43c for sensing accelerations of X, Y, Z axial direction respectively. The IM sensor block 43 has an external shape with a size of 104 mm x 92 mm x 50 mm, and a weight of about 1.5 kg.

The IM main unit 44 is formed so as to have a size of 240 mm x 100 mm x 45 mm, and a weight of about 2 kg.

The IM 42 thus constructed is mounted to the transportation container, and upon completion of the transportation, a computer 48 is connected to the IM main unit 44. Peak values G and the waveform data of continuously developed accelerations which the IM main unit 44 holds are data processed and then presented on a visual display panel (screen) of the computer. As the computer 48 to be used for data processing, it is sufficient and preferable to use a portable-type personal computer having a small size as far as the computer has a sufficient data reproducing capacity, data processing ability, a function of visually displaying the processed data.

In this embodiment, the content of collected and recorded accelerations and waveform data for the IM system contains 100,000 peak g values per each axes (X, Y, and Z axial directions) and 512 waveform data consisting of 512 points (In case of waveform data only, the IM system provides 8192 waveform data consisting of 2048 points).

Fig. 2 shows the construction of the land transportation container for use in land transportation in the transportation sequence shown in Fig.15 and the system configuration of the IM42 mounted onto the land transportation container 1.

The IM sensor block 43 is mounted onto a cradle 4 of the land transportation container 1 using a plurality of fasteners like bolts. The mounting position of the IM sensor block 43 is on the rigid portion of the cradle 4. The IM sensor block 43 may be mounted on any other position of the cradle 4 as long as it does not interfere with the container door. However, the IM sensor block 43 may preferably be mounted on the rear end portion along the direction of forward movement (a) where a larger vibration is liable to occur in transit as shown in Fig. 2.

The IM main unit 44 is mounted onto the outer container body 2a using a plurality of fasteners like bolts. The mounting position of the IM main unit 44 is in a recess 48 formed on the exterior of the outer container body 2a as shown in Fig.2. This arrangement allows the IM main unit 44 to be less protruded or exposed out of the exterior surface of the outer container body 2a.

The IM sensor block 43 is connected to the IM main unit 44 via low-noise cables 46, 47, and data collected by the IM sensor block 43 are sent to the IM main unit 44 via the low-noise cables 46, 47.

The IM system is entirely controlled from the IM main unit 44. With the IM main unit 44 switched to ON, the IM sensor block 43 picks up or detects accelerations exerted on the cradle 4 in transit. The IM system is ready to operate any time after the nuclear fuel assembly 19 is housed in the container through the container door.

The system is ready to continuously collect and record acceleration data from the time the nuclear fuel assembly 19 is housed prior to transportation and through a series of container handling operations, and further remains capable of continuously collecting and recording acceleration data in transit.

Since the duration for land transportation is relatively short, the internal power supply for the land transportation container is sufficient enough to be a power supply for the IM system. The internal power supply is normally capable of continuously driving the IM system for two to three days.

In this embodiment, the destination of the land transportation is the container tranship facility, where the land transportation container is unloaded from the truck and placed in a specified location.

Immediately after the land transportation container 1 is placed in the specified location, an inspector connects the computer 48 to the IM main unit 44 in order to collect the acceleration data stored or recorded in the IM main unit 44, subsequently, data processing is performed. The computer 48 thus outputs or presents displays shown in Fig. 3 through Fig. 6 on a visual display panel (screen) as display images. The displays allows the inspector to examine the data of accelerations to which the container has been subjected in transit and during the container handling operation, upon receiving the container.

The displayed acceleration data on the visual display panel is compared with an allowable limit value of the accelerations, and is confirmed whether the practical accelerations applied onto the container 1 is within the allowable range or not. When an abnormal data beyond the allowable limit value is displayed on the panel (screen) of the computer 48, the inspector judges the nuclear fuel assembly to have a damage, and the soundness of the nuclear fuel assembly is denied. On the other hand, when the practical acceleration data are all within the allowable range, the nuclear fuel assembly is presumed to have no damage, and the soundness of the nuclear fuel assembly is inspected and verified.

Soundness verification of the nuclear fuel assembly is thus performed, namely, the presence or absence of the damage is determined. After the above inspection, the nuclear fuel assembly 19 is put into a water transportation container (sea transportation container) in the tranship facility, before being loaded on board.

Fig. 7 and Fig. 8 show the sea transportation container 7 and the IM system mounted onto the sea transportation container 7.

As shown in Fig. 7 and Fig. 8, the sea transportation container 7 has on its both ends rigid skirt support rings 8, 9, and the IM sensor block 43 is mounted onto one skirt support ring 8 by means of fasteners like bolts.

The IM main unit 44 may be installed in a on-board position 49 to where an operator or inspector can easily access for operation, and an electrical power is supplied from outside to the IM main unit 44 through an external power supply 50.

The IM sensor block 43 is connected to the IM main unit 44 through the low-noise cable 46, and the IM main unit 44 collects and records the acceleration data derived from the IM sensor block 43.

By switching on the IM main unit 44 before departure of a ship, data of accelerations that develop in sea transportation is collected and recorded in the IM main unit. The IM main unit 44 functions as a recording means for recording the acceleration data.

Upon completion of the sea transportation, the computer 48 is connected to the IM main unit 44. The manner in which data are collected and then processed remains unchanged from that for the IM system (inspection apparatus) mounted onto the land transportation container 1.

The difference between the IM system for the sea transportation container 7 and the IM system for the land transportation container 1 is that the IM system for the sea transportation container 7 is operated by an inboard power supply via the external power supply 50, because the internal power supply of the IM main unit 44 is not sufficient enough to continuously drive for a relatively long voyage, sometimes as long as 30 to 60 days.

The above IM system is one applied for sea transportation by a ship. The sea transportation container 7 used in the transportation sequence shown in Fig.15 is transported by a trailer or a freight car from the tranship facility to the overseas export port, so that handling operations are required at both before and after the land transportation. In this case, difficulty in handling of the container is disadvantageously presented by the above-described arrangement where the IM sensor 43 and the IM main unit 44 are separately provided and the IM main unit 44 is mounted on the outside of the container.

In such a case, as a preferred apparatus for collecting and recording data of accelerations that have developed during the handling of the container and during land transportation by the trailer or the freight car, an integrated IM device 51 is available in the form of another embodiment, wherein an IM sensor block and an IM main unit are integrated and formed into a single-unit IM device 51.

The single-unit IM device (integrated-type IM device) 51, into which the IM sensor block to be mounted on the container 1 and the IM main unit 44 are integrated, is slightly larger than each of the IM sensor 43 and the IM main unit 44. The single-unit IM device 51 has a size of 170 mm x 122 mm x 86 mm and a weight of 3 kg. The device 51 is operated from the internal power supply during use. The IM device 51 lasts on the internal power supply for about two to three days.

The single-unit IM device 51 is mounted onto the other skirt support ring 9 with fastening bolts or the like. The IM device 51 is used for inspecting the soundness of the nuclear fuel assembly 19 contained in the transportation container as shown in Fig. 9 when the nuclear fuel assembly 19 is transhipped to the trailer or when transported.

The nuclear fuel assembly 19 is put into the sea transportation container 7. Data collection starts by switching ON a switch integrally mounted onto the single-unit IM device 51. When the sea transportation container 7 is fastened onto a specified position on board a ship, the switch of the single-unit IM device 51 is turned to OFF for the IM main unit 44 to collect and record data of accelerations that developed in a series of handling operations of the sea transportation container or in transit on board a trailer or a freight car. After the acceleration data is collected, the computer 48 is connected to the IM device 51. Then, data collection and processing are thus performed in the same manner as in the IM system mounted onto the land transportation container 1.

According to the above embodiments, the acceleration data collected by the IM system mounted onto the transport container is read out by the computer 48 which is connected to the IM main unit 44, then the processing of the read out data is performed. As shown in Fig. 3 through Fig. 6, the computer 48 presents on visual display panel (screen) the time-series display of acceleration, the distribution of frequency of occurrence of acceleration, waveforms of maximum accelerations and power spectrum density of maximum accelerations as display images.

Based on the results presented on the visual display panel, the embodiment of the IM system (inspection apparatus) determines whether the soundness of the nuclear fuel assembly 19 is retained through its transportation and handling operations or not. Soundness criteria for the nuclear fuel assembly vary in accordance with various factors such as construction of the assembly or container. However, the criteria are experimentally determined on the basis of results derived from the transport tests of a nuclear fuel assembly. Namely, the criteria are determined by actually collected and accumulated data of accelerations that developed in the IM system and their assessment results.

Discussed below is the determination method (inspection method) of soundness of the nuclear fuel assembly 19 using the embodiment of the IM system (inspection apparatus) after transportation and handling operations of the nuclear fuel assembly 19, with referring to Fig. 10 through Fig. 13.

Fig. 10 shows the soundness criteria graph of time-series display of accelerations developed. The ordinate represents the magnitude of accelerations, and the abscissa represents the entire transportation time band (from the start of the transportation to the end of the transportation).

That is, Fig. 10 shows a time-series display of the accelerations applied onto the vibration isolating system of the transportation container when the container is transported or handled in transit.

The accelerations applied onto the vibration isolating system of the transportation container is transmitted to the nuclear fuel assembly as it is. Therefore, when the acceleration beyond a predetermined value is transmitted and applied to the nuclear fuel assembly, the exceeding acceleration would result a great influence on the soundness of construction parts such as spacer 30 of the nuclear fuel assembly or pellets 31 contained in the assembly.

At the time of abnormal handling of the transportation container such that the container is placed on the floor, at least one of impact accelerations are applied onto the container, and the impact accelerations are sensed by the IM (inspection apparatus).

Further, at the time of transportation of the container by using a trailer or truck or the like, there is a large difference in magnitude of the accelerations to be applied onto the container in accordance with road surface conditions. When the road condition is normal and the road surfaces are relatively smooth, steady acceleration are continuously developed. In contrast, when the container is transported in non-steady conditions such that the road conditions are bad, or the trailer passes through a railroad crossing, or hits against irregularities of the road surfaces, or the trailer is brought to a sudden stop, the impact accelerations are intermittently applied onto the container.

In such cases, the IM senses and records the impact accelerations developed and applied onto the container at the abnormal handling operations, the continuously steady accelerations and the intermittent accelerations developed at the transportation, together with developing time of the accelerations. Fig. 10 is a results of these acceleration data and conditions outputted in time sequence.

From the outputted results shown in Fig. 10, which is displayed as an image on the visual display panel of the computer, it becomes possible for an inspector to inspect or judge the acceleration conditions applied onto the nuclear fuel assembly. When the developed acceleration is larger than a predetermined value (allowable limit value), it is judged that the acceleration would have a great influence on the soundness of the nuclear fuel assembly, and a deterioration of the transported products is assumed.

In Fig. 10, the shadow area represents a rejection area (not allowable range), and if at least one value of the accelerations reaches the rejection area, the transported and delivered nuclear fuel assembly is treated as a faulty product having damages. In this case, the faulty product is treated to be disposed as such.

Fig. 11 shows the soundness criteria graph of distribution of frequency of occurrence of accelerations developed. The ordinate represents the frequency of occurrence of accelerations within the transportation time band, and the abscissa represents the magnitude of accelerations developed. In the figure, the left- and right-hand end portions of the graph represent the largest acceleration regions. In the figure, the shadow portion indicates a rejection area (not allowable range). If any bars each indicating the frequency of this graph reach the rejection area, the transported and delivered nuclear fuel assembly is treated as a faulty product to be disposed as such.

That is, Fig. 11 is a graph showing the frequency (times) of occurrence of the respective acceleration values shown in Fig. 10. The relatively small accelerations distributed at a center portion of the graph have a small influence on the fuel assembly. However, when the frequency of occurrence of relatively large acceleration is increased, vibration energy due to the acceleration is also increased. Therefore, the soundness of the nuclear fuel assembly is easily influenced by the frequency of occurrence (times) of the accelerations.

In this regard, the continuous and steady accelerations have a small magnitude but have many occurrence times. In contrast, the intermittent impact accelerations have a large magnitude but a few occurrence times. Therefore, the vibration energy having influence on the soundness of the nuclear fuel assembly must be considered from both viewpoints of the acceleration values and the frequency of occurrences thereof.

Accordingly, it is required to determine the rejection areas (not-allowable ranges) for the frequency of the occurrence with respect to each case of the steady acceleration or the impact acceleration as shown in Fig. 11.

When the frequency of the occurrence of the developed acceleration is larger than a predetermined times, it is judged that the acceleration would have a great influence on the soundness of the nuclear fuel assembly, and a deterioration of the transported products is assumed.

Fig. 12 shows the soundness criteria graph resulting from waveform processing and analysis of accelerations developed in transit (PSD: Power Spectrum Density). The ordinate represents power spectrum density (PSD: units g²/Hz), and the abscissa represents frequency (Hz).

That is, Fig. 12 is a graph showing outputted results obtained by FFT (fast Fourier transform) analyzing the waveforms of all accelerations shown in Fig. 10. Fig. 12 shows a relationship between the frequency and the power spectrum density (g²/Hz). The power spectrum density indicates a magnitude of the vibration energy.

The nuclear fuel assembly in transit resonates at a predetermined frequency range exceeding a certain value. Therefore, when an acceleration having a large spectrum density within the resonant frequency range is applied onto the fuel assembly, the fuel assembly resonates, and fuel rods and spacer rings of the assembly are also resonate to each other thereby to cause the fretting damages. The damages adversely deteriorate the soundness of the nuclear fuel assembly.

Accordingly, it is required to define or determine the rejection area (non-allowable range) for the power spectrum density (PSD) as shown in Fig. 12 in order to confirm whether the damages cause in the assembly or not.

The shadow portion indicates the rejection area (not allowable range) derived from waveform processing and analysis performed by a computer. If the waveform of PSD reaches the rejection area in Fig. 12, the delivered nuclear fuel assembly is treated as a faulty product or an unacceptable article as such.

Fig. 13 shows the soundness criteria graph derived from waveform processing and analysis (g-Hz). The ordinate represents the magnitude of accelerations developed, and the abscissa represents frequency of accelerations. The black dots (· ) represents the relationship between the magnitude and frequency of the accelerations developed during the transportation. If any black dots fall within the shadow portion of the rejection area, the transported and delivered fuel assembly is treated as a faulty product or an unacceptable article as such.

Final determination or inspection of whether or not the delivered fuel assembly is rejected and then returned to the nuclear fuel fabrication facility is performed on the basis of the overall assessment derived from the results shown in Fig. 10 through Fig. 13.

The present invention is applied not only to the above described embodiments but also to the amphibious transportation container 14 shown in Fig. 19 as well. In the same manner, the acceleration data can be collected by mounting the IM sensor block 43 and the IM main unit 44 onto the amphibious transportation container 14. Alternatively, a single-unit IM device 51 may be mounted on the outer barrel 14a shown in Fig. 19.

It is also contemplated that, to collect vibration data of the nuclear fuel basket, the IM sensor according to the present invention may be mounted onto the nuclear fuel basket 13 of the sea transportation container 7 shown in Fig. 18 for use in sea transportation of nuclear fuel or onto the basket 15 of the amphibious transportation container 14 shown in Fig. 19.

As described above in detail, according to the present invention, by presenting sequentially data of both acceleration developed steadily and impact acceleration developed intermittently in transit or in handling of a transportation container, differentiating between isolated transient maximum acceleration and steady acceleration is made to come to grips with accelerations developed, and the sequential change of acceleration value is understood from a graph. Therefore, determination or inspection is accurately made of whether a damage is present or absent in the nuclear fuel assembly, whereby the soundness of the nuclear fuel assembly is thus inspected and verified.

## Claims

1. An inspection apparatus (42) for inspecting soundness of a nuclear fuel assembly (19) against acceleration developed when the nuclear fuel assembly (19) for a nuclear reactor is transported in a transportation container (1) from a nuclear fabrication facility to a nuclear power plant, said inspection apparatus comprising
sensing means (43) being mounted at the transportation container (1), for continuously sensing the acceleration and a waveform thereof taking place at the transportation container in transit and outputting signal of acceleration data detected,
recording means (44) for continuously recording a peak value and waveform data of the acceleration applied to the transportation container in response to the signal outputted from the sensing means (43), and
determining means (48) for analyzing the data from the recording means (44) and determining the soundness of the nuclear fuel assembly (19) on the basis of the result of analysis of the recorded data,
wherein said determining means (48) discriminates whether the acceleration is a temporary one or a continuous one, and includes a visual display panel for displaying the result of analysis of the recorded data and an allowable limit for the result of analysis of the recorded data of the acceleration as a display image, the display image showing time-series accelerations applied onto the transportation container, or showing a frequency distribution of occurrence of the accelerations applied onto the transportation container, or showing a relationship between the acceleration applied onto the container and frequency of the acceleration.

2. An inspection apparatus according to claim 1, wherein the analysis of the recorded data is a waveform processing and analysis of the accelerations applied onto the transportation container (1) in transit.

3. An inspection apparatus according to claim 2, wherein the result of the waveform processing and analysis of the accelerations is represented by a display image showing a relationship between power spectrum density and frequency of the accelerations.

4. An inspection apparatus according to claim 1, wherein the display image is showing a relationship between magnitude and frequency of the acceleration.

5. An inspection apparatus according to claim 1, wherein the sensing means (43) and the recording means (44) are integrated to each other to form a single unit.

6. An inspection apparatus according to anyone of the preceding claims, wherein the transportation container is a land transportation container (1) having a vibration isolator system, the vibration isolator system of the land transportation container is provided with the sensing means (43), the recording means (44) is mounted onto an outer wall of the land transportation container, and both said sensing means (43) and said recording means (44) are connected to each other via a low-noise cable.

7. The inspection apparatus according to anyone of claims 1 to 5, wherein the transportation container is a water transportation container (7), the sensing means (43) is mounted onto an outer wall of the water transportation container or onto a nuclear fuel assembly support portion of the water transportation container, the recording means (44) is mounted onto the outer wall of the water transportation container or aboard a ship, and both said sensing means (43) and said recording means (44) are connected to each other via a low-noise cable.

8. The inspection apparatus according to anyone of claims 1 to 5, wherein the transport container is an amphibious transportation container (14) having a basket for holding the nuclear fuel assembly, the sensing means (43) is mounted on the basket of the amphibious transportation container, the recording means (44) is mounted onto an outer wall of the amphibious transportation container, and both said sensing means (43) and said recording means (44) are connected via a low-noise cable.

9. An inspection method for inspecting and verifying soundness of a nuclear fuel assembly (19) against acceleration developed when the nuclear fuel assembly (19) for a nuclear reactor is transported in a transportation container (1) from a nuclear fuel fabrication facility to a nuclear power plant, in which the acceleration and a waveform thereof taking place at the transportation container (1) are continuously sensed in transit and a signal of acceleration data is outputted, a peak value and waveform data of the acceleration applied to the transportation container is continuously recorded in response to the signal outputted, data processing is performed in order to display or output on a display means of a computer (48) connected to a recording means (44) and the data from the recording means is analyzed and the soundness of the nuclear fuel assembly is discriminated on the basis of the result of analysis of the recorded data,
wherein the fact whether the acceleration is a temporary one or a continuous one is determined, and the result of analysis of the recorded data and an allowable limit for the result of analysis of the recorded data of the acceleration are visually displayed as display image, and the soundness thereof is inspected, the display image showing time-series accelerations applied onto the transportation container, or showing a frequency distribution of occurrence of the accelerations applied onto the transportation container, or showing a relationship between the acceleration applied onto the container and frequency of the acceleration.

10. An inspection method according to claim 9, wherein the analysis of the recorded data is a waveform processing and analysis of the accelerations applied onto the transportation container (1) in transit.

11. An inspection method according to claim 10, wherein the result of the waveform processing and analysis of the accelerations is represented by a display image showing a relationship between power spectrum density and frequency of the accelerations.

12. An inspection method according to claim 9, wherein the display image is showing a relationship between magnitude and frequency of the acceleration.

## Patentansprüche

1. Inspektionsgerät (42) zur Untersuchung der Unversehrtheit eines Kernbrennelements (19) trotz Beschleunigungen, die auftreten, wenn das für einen Kernreaktor vorgesehene Brennelement (19) in einem Transportbehälter (1) von einer Kerntechnikanlage zu einem Kernkraftwerk transportiert wird, wobei das Inspektionsgerät aufweist:
eine Erfassungseinrichtung (43), die an dem Transportbehälter (1) montiert ist und zum kontinuierlichen Erfassen der Beschleunigung und einer Wellenform derselben, die auf den Transportbehälter während des Transports einwirkt, sowie zum Ausgeben eines Signals bezüglich erfasster Beschleunigungsdaten dient,
eine Aufzeichnungseinrichtung (44) zum kontinuierlichen Aufzeichnen eines Spitzenwerts und von Wellenformdaten bezüglich der Beschleunigung, die auf den Transportbehälter ausgeübt wird, in Abhängigkeit von dem Signal, das von der Erfassungseinrichtung (43) ausgegeben wird, und
einer Ermittlungseinrichtung (48) zum Analysieren der von der Aufzeichnungseinrichtung (44) stammenden Daten und zum Ermitteln der Unversehrtheit des Kernbrennelements (19) auf der Grundlage des Ergebnisses der Analyse der aufgezeichneten Daten,
wobei die Ermittlungseinrichtung (48) erkennt, ob die Beschleunigung eine zeitweilige oder eine kontinuierliche Beschleunigung ist, und eine Sichtanzeigetafel zur Anzeige des Ergebnisses der Analyse der aufgezeichneten Daten und einer zulässigen Grenze für das Ergebnis der Analyse der bezüglich der Beschleunigung aufgezeichneten Daten in Form eines Anzeigebilds enthält, wobei das Anzeigebild die zeitliche Folge der auf den Transportbehälter ausgeübten Beschleunigungen anzeigt, oder eine Frequenzverteilung des Auftretens der auf den Transportbehälter ausgeübten Beschleunigungen anzeigt, oder eine Beziehung zwischen der auf den Behälter ausgeübten Beschleunigung und der Frequenz der Beschleunigung anzeigt.

2. Inspektionsgerät nach Anspruch 1, bei dem die Analyse der aufgezeichneten Daten eine Wellenformverarbeitung und -Analyse der Beschleunigungen ist, die auf den Transportbehälter (1) bei dem Transport ausgeübt werden.

3. Inspektionsgerät nach Anspruch 2, bei dem das Ergebnis der Wellenformverarbeitung und der Analyse der Beschleunigungen durch das Anzeigebild repräsentiert wird, das eine Beziehung zwischen der spektralen Leistungsdichte und der Frequenz der Beschleunigungen anzeigt.

4. Inspektionsgerät nach Anspruch 1, bei dem das Anzeigebild die Beziehung zwischen der Größe und der Frequenz der Beschleunigung anzeigt.

5. Inspektionsgerät nach Anspruch 1, bei dem die Erfassungseinrichtung (43) und die Aufzeichnungseinrichtung (44) zur Bildung einer einzigen Einheit zusammengefaßt sind.

6. Inspektionsgerät nach einem der vorhergehenden Ansprüche, bei dem der Transportbehälter ein Landtransportbehälter (1) ist, der ein Vibrationsisolatorsystem aufweist, wobei das Vibrationsisolatorsystem des Landtransportbehälters mit der Erfassungseinrichtung (43) versehen ist, wobei die Aufzeichnungseinrichtung (44) an einer Außenwand des Landtransportbehälters angebracht ist, und wobei sowohl die Erfassungseinrichtung (43) als auch die Aufzeichnungseinrichtung (44) miteinander über ein störungsarmes Kabel verbunden sind.

7. Inspektionsgerät nach einem der Ansprüche 1 bis 5, bei dem der Transportbehälter ein Wassertransportbehälter (7) ist, bei dem die Erfassungseinrichtung (43) an einer Außenwand des Wassertransportbehälters oder an einem das Kernbrennelement haltenden Halterungsabschnitt des Wassertransportbehälters montiert ist, bei dem die Aufzeichnungseinrichtung (44) an der Außenwand des Wassertransportbehälters oder an einem Schiff angebracht ist, und bei dem sowohl die Erfassungseinrichtung (43) als auch die Aufzeichnungseinrichtung (44) miteinander über ein störungsarmes Kabel verbunden sind.

8. Inspektionsgerät nach einem der Ansprüche 1 bis 5, bei dem der Transportbehälter ein Amphibientransportbehälter (14) ist, der einen Korb zum Halten des Kernbrennelements aufweist, bei dem die Erfassungseinrichtung (43) an dem Korb des Amphibientransportbehälters montiert ist, bei dem die Aufzeichnungseinrichtung (44) an einer Außenwand des Amphibientransportbehälters angebracht ist, und bei dem sowohl die Erfassungseinrichtung (43) als auch die Aufzeichnungseinrichtung (44) miteinander über ein störungsarmes Kabel verbunden sind.

9. Inspektionsverfahren zum Untersuchen und Bestätigen der Unversehrtheit eines Kernbrennelements (19) trotz Beschleunigungen, die aufgetreten sind, während das für einen Kernreaktor vorgesehene Kernbrennelement (19) in einem Transportbehälter (1) von einer Kerntechnikanlage zu einem Kernkraftwerk transportiert wird, wobei die Beschleunigung und eine Wellenform derselben, die auf den Transportbehälter (1) einwirken, kontinuierlich bei dem Transport erfaßt werden und ein Signal bezüglich der Beschleunigungsdaten ausgegeben wird, wobei ein Spitzenwert und Wellenformdaten der Beschleunigung, die auf den Transportbehälter ausgeübt wird, kontinuierlich in Abhängigkeit von dem ausgegebenen Signal aufgezeichnet werden, wobei eine Datenverarbeitung ausgeführt wird, um eine Anzeige oder eine Ausgabe auf einer Anzeigeeinrichtung eines Computers (48), der mit einer Aufzeichnungseinrichtung (44) verbunden ist, zu bewirken, und die von der Aufzeichnungseinrichtung stammenden Daten analysiert werden und die Unversehrtheit des Kernbrennelements auf der Grundlage des Ergebnisses der Analyse der aufgezeichneten Daten ermittelt wird,
wobei der Sachverhalt, ob die Beschleunigung eine vorübergehende oder eine kontinuierliche Beschleunigung ist, erfaßt wird, und wobei das Ergebnis der Analyse der aufgezeichneten Daten und eine zulässige Grenze für das Ergebnis der Analyse der bezüglich der Beschleunigung aufgezeichneten Daten visuell in Form eines Anzeigebilds dargestellt wird, und die Unversehrtheit des Kernbrennelements untersucht wird, wobei das Anzeigebild die zeitliche Folge der auf den Transportbehälter ausgeübten Beschleunigungen anzeigt, oder eine Frequenzverteilung des Auftretens der auf den Transportbehälter ausgeübten Beschleunigungen anzeigt, oder eine Beziehung zwischen der auf den Behälter ausgeübten Beschleunigung und der Frequenz der Beschleunigung anzeigt.

10. Inspektionsverfahren nach Anspruch 9, bei dem die Analyse der aufgezeichneten Daten durch eine Wellenformverarbeitung und Analyse der Beschleunigungen realisiert wird, die auf den Transportbehälter (1) während des Transports ausgeübt werden.

11. Inspektionsverfahren nach Anspruch 10, bei dem das Ergebnis der Wellenformverarbeitung und der Analyse der Beschleunigungen durch ein Anzeigebild repräsentiert wird, das eine Beziehung zwischen der spektralen Leistungsdichte und der Frequenz der Beschleunigungen anzeigt.

12. Inspektionsverfahren nach Anspruch 9, bei dem das Anzeigebild eine Beziehung zwischen der Größe und der Frequenz der Beschleunigung anzeigt.

## Revendications

1. Appareil de contrôle (42) pour contrôler l'état d'un assemblage combustible nucléaire (19) face à une accélération développée quand l'assemblage combustible nucléaire (19)pour réacteur nucléaire est transporté dans un conteneur de transport (1) d'une installation de fabrication nucléaire à une centrale nucléaire, ledit appareil de contrôle comprenant :
un moyen capteur (43) monté sur le conteneur de transport (1), pour capter de façon continue l'accélération et sa forme d'onde apparaissant sur le conteneur de transport en transit et sortir un signal des données d'accélération détectées,
un moyen d'enregistrement (44) pour enregistrer de façon continue une valeur de crête et des données de forme d'onde de l'accélération appliquée au conteneur de transport en réponse au signal sorti du moyen capteur (43), et
un moyen de détermination (48) pour analyser les données provenant du moyen d'enregistrement (44) et déterminer l'état de l'assemblage combustible nucléaire (19) selon le résultat d'analyse des données enregistrées,
dans lequel ledit moyen de détermination (48) détermine si l'accélération est temporaire ou continue, et comprend un panneau d'affichage pour afficher le résultat d'analyse des données enregistrées et une limite admissible pour le résultat d'analyse des données enregistrées de l'accélération sous forme d'une image affichée, l'image affichée indiquant des accélérations en série dans le temps appliquées sur le conteneur de transport, ou indiquant une répartition de la fréquence d'apparition des accélérations appliquées sur le conteneur de transport, ou indiquant une relation entre l'accélération appliquée au conteneur et la fréquence de l'accélération.

2. Appareil de contrôle selon la revendication 1, dans lequel l'analyse des données enregistrées est un traitement de formes d'onde et une analyse des accélérations appliquées sur le conteneur de transport (1) en transit.

3. Appareil de contrôle selon la revendication 2, dans lequel le résultat du traitement de formes d'onde et de l'analyse des accélérations est représenté par une image affichée indiquant une relation entre la densité spectrale de puissance et la fréquence des accélérations.

4. Appareil de contrôle selon la revendication 1, dans lequel l'image affichée indique une relation entre l'amplitude et la fréquence de l'accélération.

5. Appareil de contrôle selon la revendication 1, dans lequel le moyen capteur (43) et le moyen d'enregistrement (44) sont intégrés l'un par rapport à l'autre pour former une seule unité.

6. Appareil de contrôle selon l'une quelconque des revendications précédentes, dans lequel le conteneur de transport est un conteneur de transport par terre (1) comportant un système isolant des vibrations, le système isolant des vibrations du conteneur de transport par terre est pourvu du moyen capteur (43), le moyen d'enregistrement (44) est monté sur une paroi extérieure du conteneur de transport par terre, et ledit moyen capteur (43) et ledit moyen d'enregistrement (44) sont connectés entre eux deux par un câble à faible bruit.

7. Appareil de contrôle selon l'une quelconque des revendications 1 à 5, dans lequel le conteneur de transport est un conteneur de transport par eau (7), le moyen capteur (43) est monté sur une paroi extérieure du conteneur de transport par eau ou sur une partie de support d'assemblage combustible nucléaire du conteneur de transport par eau, le moyen d'enregistrement (44) est monté sur la paroi extérieure du conteneur de transport par eau ou à bord d'un bateau, et ledit moyen capteur (43) et ledit moyen d'enregistrement (44) sont connectés entre eux deux par un câble à faible bruit.

8. Appareil de contrôle selon l'une quelconque des revendications 1 à 5, dans lequel le conteneur de transport est un conteneur de transport amphibie (14) comportant un panier pour contenir l'assemblage combustible nucléaire, le moyen capteur (43) est monté sur le panier du conteneur de transport amphibie, le moyen d'enregistrement (44) est monté sur une paroi extérieure du conteneur de transport amphibie, et ledit moyen capteur (43) et ledit moyen d'enregistrement (44) sont tous les deux connectés par un câble à faible bruit.

9. Procédé de contrôle pour contrôler et vérifier l'état d'un assemblage combustible nucléaire (19) face à une accélération développée quand l'assemblage combustible nucléaire (19) pour réacteur nucléaire est transporté dans un conteneur de transport (1) d'une installation de fabrication de combustible nucléaire à une centrale nucléaire, dans lequel l'accélération et sa forme d'onde apparaissant sur le conteneur de transport (1) sont captées de façon continue en transit et un signal de données d'accélération est sorti, une valeur de crête et des données de forme d'onde de l'accélération appliquée au conteneur de transport sont enregistrées de façon continue en réponse au signal sorti, un traitement de données est exécuté afin d'effectuer un affichage ou une sortie sur un moyen d'affichage d'un ordinateur (48) connecté à un moyen d'enregistrement (44) et les données provenant du moyen d'enregistrement sont analysées et l'état de l'assemblage combustible nucléaire est déterminé selon le résultat d'analyse des données enregistrées,
dans lequel on détermine le fait que l'accélération est temporaire ou continue, et on affiche le résultat d'analyse des données enregistrées et une limite admissible pour le résultat d'analyse des données enregistrées de l'accélération sous forme d'une image affichée, et on contrôle son état, l'image affichée indiquant des accélérations en série dans le temps appliquées sur le conteneur de transport, ou indiquant une répartition de la fréquence d'apparition des accélérations appliquées sur le conteneur de transport, ou indiquant une relation entre l'accélération appliquée sur le conteneur et la fréquence de l'accélération.

10. Procédé de contrôle selon la revendication 9, dans lequel l'analyse des données enregistrées est un traitement de formes d'onde et une analyse des accélérations appliquées sur le conteneur de transport (1) en transit.

11. Procédé de contrôle selon la revendication 10, dans lequel le résultat du traitement de formes d'onde et de l'analyse des accélérations est représenté par une image affichée indiquant une relation entre la densité spectrale de puissance et la fréquence des accélérations.

12. Procédé de contrôle selon la revendication 9, dans lequel l'image affichée indique une relation entre l'amplitude et la fréquence de l'accélération.
